# EUROPEAN PATENT APPLICATION

(11) **EP 3 578 461 A1**
(43) Date of publication of application: **11.12.2019**
(21) Application number: 18196355.4
(22) Date of filing: 24.09.2018
(51) Int. Cl.: B64C 39/02, B64C 1/30

(54) **WING UNIT OF UNMANNED AERIAL VEHICLE AND UNMANNED AERIAL VEHICLE**

(30) Priority: 06.06.2018 CN 201810575683
(71) Applicant: Donghan Solar UAV Technology Co., Ltd, Beijing (CN)
(72) Inventor: BAI, Mo, Beijing, Beijing (CN); DOU, Xiaobo, Beijing, Beijing (CN); SONG, Bingyin, Beijing, Beijing (CN)
(74) Representative: Modiano, Gabriella Diana

(57) **Abstract**

A wing unit of an unmanned aerial vehicle includes a middle wing, an outer wing and a connecting device which includes a first connecting portion and a second connecting portion. One of the first connecting portion and the second connecting portion is fixed on the middle wing and the other one is fixed on the outer wing. The first connecting portion and the second connecting portion are detachably connected. The connecting device also includes a restricting device which enables the first connecting portion and the second connecting portion to be fixedly connected or be separated.

## Description

This application claims the priority of the Chinese patent application No. 201810575683.1 filed June 6, 2018, the entire content of which is hereby incorporated by reference.

### Technical Field

Embodiments of the present application relate to, but are not limited to, the field of unmanned aerial vehicles, and in particular to, but not limited to, a wing unit of an unmanned aerial vehicle and the unmanned aerial vehicle.

### Background

In order to facilitate transportation, a fixed-wing unmanned aerial vehicle (including middle wing, outer wing, etc.) is usually dissembled into several parts for transportation and reassembled before operation. A connection and assembly process of an unmanned aerial vehicle includes sequentially connecting a power connector, a signal plug and a carbon fiber tube, and finally fixing the position of the wing connecting portion by a fastening device (such as a positioning screw). The connection strength is ensured by the carbon fiber tube, the connection accuracy is ensured by the fastening device, and the electrical connection of the on-board electrical appliances is realized by the signal connector and the power connector.

However, the assembly process of the wing unit of the unmanned aerial vehicle has the following disadvantages:
1. When the fastening devices are used to fix the position, they need to be tightened manually, and since there are many components, the operation is very complicated;
2. Due to the difficulty in processing carbon fiber tubes, the manufacturing accuracy of carbon fiber tubes often fails to meet the assembly requirements of transition fit, so that the plug-in fitting is susceptible to be an interference fit or a clearance fit;
3. Since carbon fiber is easy to wear, with the increase of plug-in times, the matching accuracy will further decline, greatly reducing the stability of unmanned aerial vehicle assembly, which will inevitably bring some potential safety hazards to the operation reliability of unmanned aerial vehicle.

### Summary

The following is an overview of the subject matter described in detail herein. This summary is not intended to limit the protection scope of the claims.

An embodiment of the application provides a wing unit of an unmanned aerial vehicle including a middle wing, an outer wing and a connecting device which includes a first connecting portion and a second connecting portion. One of the first connecting portion and the second connecting portion is fixed on the middle wing and the other one is fixed on the outer wing. The first connecting portion and the second connecting portion are detachably connected. The connecting device also includes a restricting device which enables the first connecting portion and the second connecting portion to be fixedly connected or be separated.

An embodiment of the application also provides an unmanned aerial vehicle which includes the wing unit of the unmanned aerial vehicle described above.

Other aspects will become apparent after reading and understanding the brief description of the drawings and the embodiments of the present application.

### Brief Description of Drawings

The accompanying drawings are used to provide a further understanding of the technical solutions of the embodiments of the present application and form a part of the specification, and together with the embodiments of the present application, serve to explain the technical solutions of the embodiments of the present application and do not constitute a limitation on the technical solutions of the embodiments of the present application.
FIG. 1 is a partial structural schematic view of a wing unit of an unmanned aerial vehicle according to an embodiment of the present application, showing a plug-in connector and a groove assembly for plug-in fitting;
FIG. 2 is a front structural schematic view of FIG. 1;
FIG. 3 is a side structural schematic view of FIG. 1;
FIG. 4 is a structural schematic view of the plug-in connector (inverted) in FIG. 1;
FIG. 5 is a structural schematic view of the groove assembly (inverted) in FIG. 1;
FIG. 6 is a structural schematic view of an outer rib plate of middle wing of an unmanned aerial vehicle according to an embodiment of the present application;
FIG. 7 is a schematic structural view of a clamping element in a wing unit of an unmanned aerial vehicle cooperating with a clamping connector according to an embodiment of the present application.

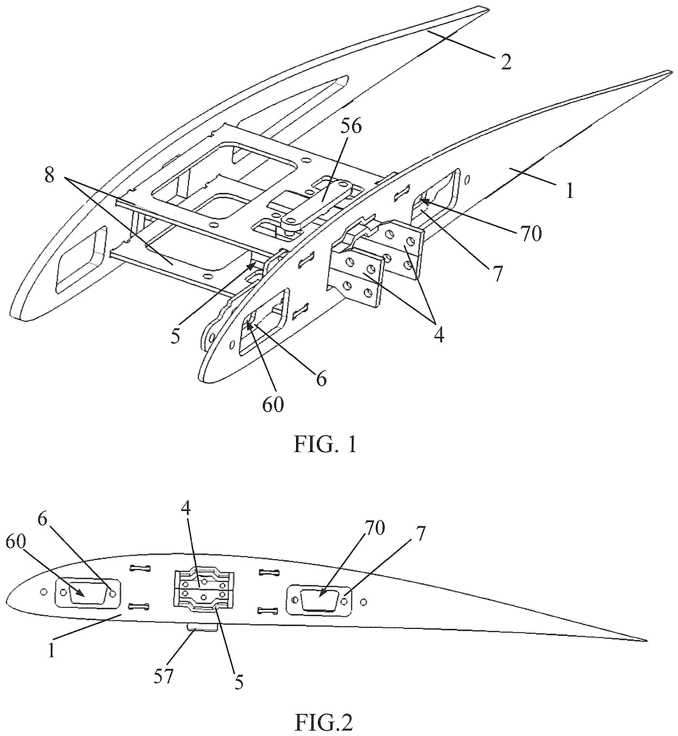

The correspondence between reference signs and components in FIGs. 1-7 is as follows:
1 -- outer rib plate of middle wing, 2 -- inner rib plate of middle wing, 4 -- plug-in connector, 41 -- upper protrusion, 410 -- slope surface, 42 -- lower protrusion, 43 -- restricting hole, 5 -- groove assembly, 50 -- groove, 51 -- upper groove wall, 510 -- upper sunk groove, 511 -- second through hole, 52 -- lower groove wall, 520 -- lower sunk groove, 53 -- restricting protrusion, 530 -- slope mating surface, 54 -- elastic member, 55 -- connecting rod, 550 -- stop, 56 -- restricting baffle, 57 -- control element, 58 -- first magnet element, 6 -- signal connector fixing plate, 60 -- signal connector groove, 7 -- power connector fixing plate, 70 -- power connector groove, 8 -- groove fixing plate, 4' -- clamping connector, 41' -- restricting protrusion, 5' -- clamping element, 51'-52' -- clamping arm, 53'-55' -- hinge point, 56' -- control element.

### Detailed Description

Hereinafter, embodiments of the present application will be described in detail in combination with the accompanying drawings. It should be understood that, if without conflict, the embodiments and features in the embodiments of the present application may be combined with each other arbitrarily.

An embodiment of the application provides a wing unit of an unmanned aerial vehicle, including a middle wing, an outer wing and a connecting device which includes a first connecting portion and a second connecting portion. One of the first connecting portion and the second connecting portion is fixed on the middle wing and the other one is fixed on the outer wing. The first connecting portion and the second connecting portion are detachably connected. The connecting device also includes a restricting device which enables the first connecting portion and the second connecting portion to be fixedly connected or be separated.

In the wing unit of the unmanned aerial vehicle described above, by the mating connection of the first connecting portion and the second connecting portion and by the restricting device for restricting, the first connecting portion and the second connecting portion are kept in a connected state, so that a fixed and stable connection of the middle wing and the outer wing can be realized and ensured. By releasing the restricting device, the first connecting portion and the second connecting portion can be separated, and the middle wing and the outer wing can be detached and separated.

The first connecting portion and the second connecting portion are fixed in the connected state by the restricting device or the first connecting portion and the second connecting portion are separated by releasing the restricting device, so that the middle wing and the outer wing are firmly connected, accurately positioned, conveniently assembled and disassembled, thus the assembly process of the wing unit is simplified, and the assembly and disassembly efficiency of the wing unit is improved.

In an exemplary embodiment, as shown in FIGs. 1-5, the first connecting portion includes a plug-in connector 4, and the second connecting portion includes a groove assembly 5 in which a groove 50 is formed. The plug-in connector 4 is plug-in fitted with the groove 50, so that the connection between the middle wing and the outer wing can be realized and the connection strength can be ensured.

One of the plug-in connector 4 and the groove assembly 5 may be provided with a movable restricting protrusion 53, and the other one may be provided with a restricting mating portion. The restricting protrusion 53 may be fitted with the restricting mating portion for restricting or separated from the restricting mating portion.

In the process of gradually inserting the plug-in connector 4 into the groove 50, when the plug-in connector 4 is inserted into the preset position, the restricting protrusion 53 cooperates with the restricting mating portion for restricting, to prevent the plug-in connector 4 from continuing to be inserted or removed, so as to position and fix the plug-in connector 4 relative to the groove assembly 5. Since the restricting protrusion 53 is movable, the restricting protrusion 53 in a position fitted state can be separated from the restricting mating portion, so that when the middle wing and the outer wing are needed to be separated, the restricting protrusion 53 can be separated from the restricting mating portion first, and then the plug-in connector 4 is pulled out of the groove 50, thus completing the separation of the middle wing and the outer wing.

Due to the plug-in fit of the plug-in connector 4 and the groove assembly 5, and the fitting or separation of the restricting protrusion 53 and the restricting mating surface, the plug-in fit of the middle wing and the outer wing is convenient, accurate and stable, and the disassemble is easy, simplifying the assembly process of the wing unit and improving the assembly and disassembly efficiency thereof.

As shown in FIGs. 1-3, in this exemplary embodiment, in the wing unit of the unmanned aerial vehicle, the groove assembly 5 is provided on the groove fixing plate 8 of the middle wing, and the plug-in connector 4 is provided on the outer wing. In another exemplary embodiment, the groove assembly 5 may be provided on the outer wing and the plug-in connector 4 may be provided on the middle wing.

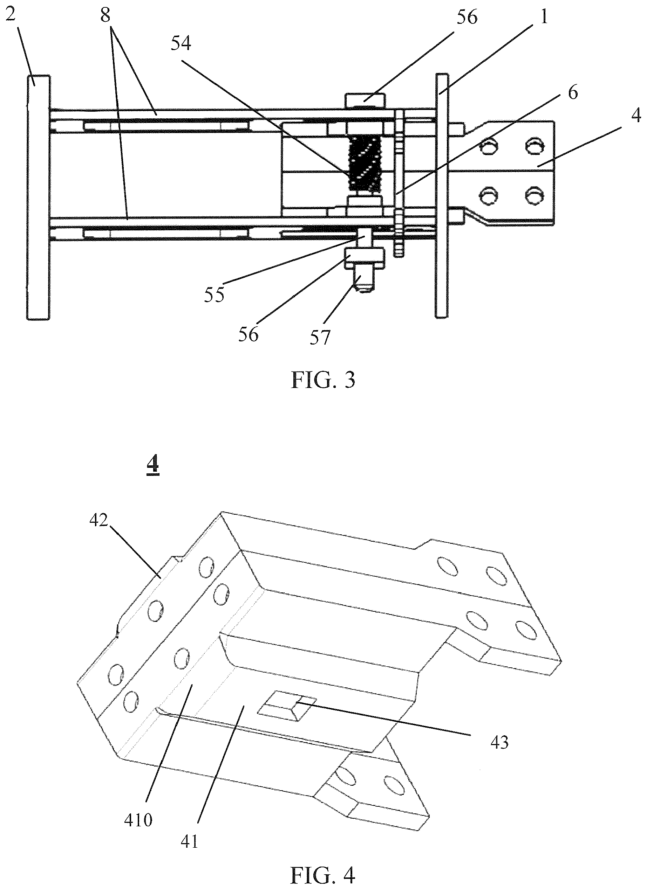

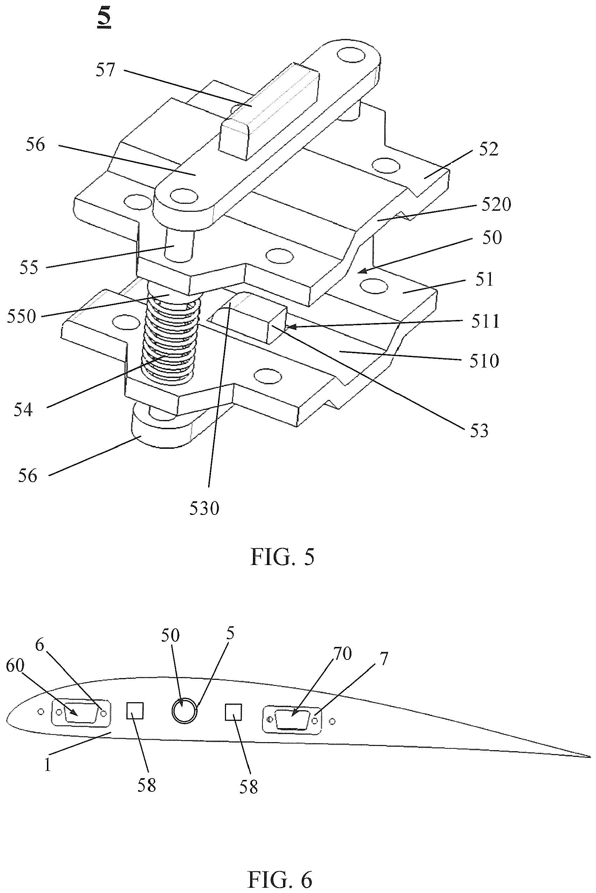

As shown in FIGs. 4 and 5, the plug-in connector 4 includes an upper wall surface and a lower wall surface which are respectively provided with an upper protrusion 41 and a lower protrusion 42. The groove assembly 5 includes an upper groove wall 51 and a lower groove wall 52 which together form a groove 50 therebetween. The upper groove wall 51 and the lower groove wall 52 are respectively provided with an upper sunk groove 510 and a lower sunk groove 520 matching with the upper protrusion 41 and the lower protrusion 42 of the plug-in connector 4 respectively.

When being plugged, the upper protrusion 41 and the lower protrusion 42 of the plug-in connector 4 respectively cooperate with the upper sunk groove 510 and the lower sunk groove 520 of the groove assembly 5. The side walls of the upper protrusion 41 and the lower protrusion 42 and the side walls of the upper sunk groove 510 and the lower sunk groove 520 are inclined, effectively increasing the contact area when plugged, and allowing an insertion end (which is on the left side in FIG. 4, and on the right side is the outer end with a stop) of the plug-in connector 4 to easily enter the groove 50 from one side (the left side in FIG. 5). By fitting the upper protrusion 41 of the plug-in connector 4 with the upper sunk groove 510 and the lower protrusion 42 of the plug-in connector 4 with the lower sunk groove 520, the plug-in fitting of the plug-in connector 4 and the groove 50 is stable, and the effects of desired restricting, anti-shaking, and easy to plug-in and release are achieved.

As can be seen from FIGs. 4 and 5 (FIG. 4 is a schematic view of the inverted structure of the plug-in connector 4 in FIG. 1, and FIG. 5 is a schematic view of the inverted structure of the groove assembly 5 in FIG. 1), the upper groove wall 51 of the groove assembly 5 is provided with a restricting protrusion 53, and the upper protrusion 41 of the plug-in connector 4 is correspondingly provided with a restricting hole 43 which is a restricting mating portion cooperated with the restricting protrusion 53 for restricting. When the plug-in connector 4 is inserted into the groove 50 from one side and in parallel with the groove 50, the insertion end of the plug-in connector 4 first contacts the restricting protrusion 53 and then pushes against the restricting protrusion 53, causing the restricting protrusion 53 to move upward from the restriction position (i.e., the position shown in FIG. 5) to the release position in a direction substantially perpendicular to the upper groove wall 51, so that the plug-in connector 4 can smoothly enter the groove 50. When the plug-in connector 4 continues to move and plug into place, the restricting protrusion 53 is reset (that is, the restricting protrusion 53 moves from the release position to the restriction position) and is fitted with the restricting hole 43, so that the plug-in connector 4 can be firmly fitted in the groove 50 when plugged, and loosening or dropping off due to shaking during use is less likely to happen, thereby improving the mounting stability between the middle wing and the outer wing.

When being dissembled, once the restricting protrusion 53 is moved away from the restricting hole 43 (that is, the restricting protrusion 53 is moved from the restriction position to the release position), the plug-in connector 4 can be reversely removed from the groove 50 to complete the disassembly operation of the middle wing and the outer wing. When the plug-in connector 4 is disengaged from the restricting protrusion 53, the restricting protrusion 53 is reset to its restriction position.

The restricting structure is simple and reasonable in design and easy to implement. Compared with the unmanned aerial vehicle assembly process in which only the positioning screws are used for restricting, the assembly process in the application is greatly simplified, the assembly steps are greatly reduced, the trouble of connecting the carbon fiber tubes is avoided, and removing the positioning screws one by one during disassembly is no longer needed, so that the effects of easy assembly and disassembly are realized, and the assembly and disassembly efficiency is improved.

It this exemplary embodiment, the restricting protrusion 53 and the restricting hole 43 are respectively provided at the upper portion of the groove 50 and upper portion of the plug-in connector. In another exemplary embodiment, the restricting hole may be provided in the lower protrusion 42 of the plug-in connector 4, and the restricting protrusion may be correspondingly provided on the lower groove wall 52 of the groove assembly 5. In the latter case, the plug-in connector 4 may also be pushed against the restricting protrusion, so as to plug-in fit or separate the restricting protrusion relative to the restricting hole. In the present exemplary embodiment, the restricting protrusion 53 is provided at the middle position of the upper groove wall 51, that is, on the upper sunk groove 510. In another exemplary embodiment, the restricting protrusion 53 may be provided at any position of the upper groove wall 51 or the lower groove wall 52 other than the middle position. None of the above is limited in this application.

In an exemplary embodiment, the middle wing includes an inner rib plate 2 of middle wing and an outer rib plate 1 of middle wing, the outer wing includes an inner rib plate of outer wing and an outer rib plate of outer wing. The plug-in connector 4 and the groove assembly 5 are fixed to the outer rib plate 1 of middle wing and the outer rib plate of outer wing respectively. In this embodiment, as shown in FIGs. 1 and 3, the plug-in connector 4 is fixed to the outer rib plate of outer wing, and the groove assembly 5 is fixed to the outer rib plate 1 of middle wing. The plug-in connector 4 and the groove assembly 5 are located outside or near the outside of the middle wing and the outer wing, thus facilitating the assembly operation of the plug-in connector 4 and the groove assembly 5.

In an exemplary embodiment, the connecting device further includes a signal connector fixing plate 6 and a signal connector, one of the signal connector fixing plate 6 and the signal connector is fixed on the outer rib plate 1 of middle wing and the other one is fixed on the outer rib plate of outer wing. The signal connector fixing plate 6 is provided with a signal connector groove 60, and the signal connector is plugged into the signal connector groove 60.

In an exemplary embodiment, the connecting device also includes a power connector fixing plate 7 and a power connector. One of the power connector fixing plate 7 and the power connector is fixed on the outer rib plate 1 of middle wing and the other one is fixed on the outer rib plate of outer wing. The power connector fixing plate 7 is provided with a power connector groove 70, and the power connector is plugged into the power connector groove 70.

In this embodiment, as shown in FIGs. 1 and 2, the connecting device also includes a signal connector and a signal connector fixing plate 6 provided with a signal connector groove 60. The connecting device also includes a power connector and a power connector fixing plate 7 provided with a power connector groove 70. The signal connector fixing plate 6 and the power connector fixing plate 7 are both fixed on the outer rib plate 1 of middle wing, and the signal connector and the power connector are fixed on the outer rib plate of outer wing, so that the signal connector groove 60, the power connector groove 70 and the groove 50 of the groove assembly 5 are arranged on the same side. As a result, the plug-in operation of the signal connector and the signal connector groove 60 and of the power connector and the power connector groove 70 can be completed synchronously with the plug-in fitting of the plug-in connector 4 and the groove assembly 5. During disassembly, the separation operation of the plug-in connector 4 and the groove assembly 5, of the signal connector and the signal connector groove 60, and of the power connector and the power connector groove 70 can be completed simultaneously by separating the plug-in connector 4 from the groove assembly 5, effectively avoiding the tedious work of separately attaching the plug-in connector 4, the power connector and the signal connector when assembling the unmanned aerial vehicle, avoiding the trouble of connecting the carbon fiber tube. Since successively separating the plug-in connector 4, the signal connector and the power connector from the groove assembly 5, the signal connector groove 60 and the power connector groove 70 respectively when being dissembled is no longer needed, the electrical connection process of the middle wing and the outer wing is greatly simplified and the mounting efficiency is improved.

In an exemplary embodiment, when the groove assembly is arranged on the outer wing and the plug-in connector is arranged on the middle wing, the signal connector fixing plate, the power connector fixing plate and the groove assembly are arranged on the same side, that is, fixed on the outer rib plate of outer wing, while the signal connector, the power connector and the plug-in connector are arranged on the same side, that is, fixed on the outer rib plate of middle wing. Therefore, the plug-in operation of the plug-in connector on the middle wing and the groove, of the signal connector and the signal connector groove, and of the power connector and the power connector groove can be completed synchronously. When being disassembled, the separation operation of the plug-in connector and the groove, of the signal connector and the signal connector groove, and of the power connector and the power connector groove can be simultaneously completed by separating the plug-in connector from the groove, so as to simplify the process of connecting the electrical equipments of the middle wing and the outer wing and improve the assembly and disassembly efficiency.

In another exemplary embodiment, the signal connector fixing plate, the power connector fixing plate, and the groove assembly may not be disposed on the same side, and the signal connector, the power connector, and the plug-in connector may not be disposed on the same side as well. In such case, synchronous plug-in fitting or separation operation of the plug-in connector and the groove, of the signal connector and the signal connector groove, and of the power connector and the power connector groove can also be realized.

In an exemplary embodiment, the groove assembly 5 includes an elastic member 54, and the restricting protrusion 53 cooperates with the restricting hole 43 for restricting under the action of the elastic member 54. In this embodiment, as shown in FIGs. 3-5, the elastic member 54 applies elastic force to the restricting protrusion 53 which can move from the release position to the restriction position under the elastic force of the elastic member 54, be plugged into the restricting hole 43 and be kept in the plugged state, so that the plug-in connector 4 and the groove 50 are in the plugged state. The elastic member 54 can also be deformed under the action of an external force so that the restricting protrusion 53 can move from the restriction position to the release position and be separated from the restricting hole 43, thus the plug-in connector 4 is separated from the groove 50 and the middle wing is separated from the outer wing.

In an exemplary embodiment, the groove assembly 5 further includes a control element 57 that can move the restricting protrusion 53 to separate the restricting protrusion 53 from the restricting hole 43, thereby facilitating the separation of the plug-in connector 4 and the groove 50. Specifically, when separating the plug-in connector 4 and the groove 50, an operator only needs to drive the restricting protrusion 53 to the release position by controlling the control element 57 and simultaneously compress the elastic member 54, so that the restricting protrusion 53 is separated from the restricting hole 43, and then the plug-in connector 4 can be removed from the groove 50. When the plug-in connector 4 is removed from the groove 50, the restricting protrusion 53 is reset under the elastic restoring force of the elastic member 54 to return to its restriction position.

By utilizing the cooperation of the control element 57 and the elastic member 54, it is convenient to cooperative restriction and separation of the restricting protrusion 53 and the restricting hole 43, thereby facilitating the plug-in and separation operation between the plug-in connector 4 and the groove 50 and improving the assembly and disassembly efficiency of the middle wing and the outer wing.

In an exemplary embodiment, the groove assembly 5 also includes a restricting baffle 56 and a connecting rod 55. The connecting rod 55 is movably connected to the groove wall of the groove assembly 5. One end of the elastic member 54 is pressed against the groove wall of the groove assembly 5 and the other end is pressed against the connecting rod 55. The restricting baffle 56 is connected to the connecting rod 55, and the restricting protrusion 53 is provided on the restricting baffle 56. Since the connecting rod 55 is movably connected to the groove wall of the groove assembly 5, the connecting rod 55 can move relative to the groove 50 and compress the elastic member 54. Then, the restricting baffle 56 and the restricting protrusion 53 thereon are driven to move, so that the restricting protrusion 53 can move between the restriction position and the release position and can be inserted into or separated from the restricting hole 43, and thus the plug-in connector 4 can be easily inserted into or withdrawn from the groove 50 to facilitate the connection and separation of the middle wing and the outer wing.

In an exemplary embodiment, the restricting protrusion 53 is provided on the groove assembly 5, the restricting hole 43 is correspondingly provided on the plug-in connector 4. When the plug-in connector 4 is plugged into the groove 50, the restricting hole 43 is located in the groove 50, while the restricting baffle 56 is located outside the groove 50. Therefore, in order to facilitate the restricting protrusion 53 on the restricting baffle 56 to enter the groove 50 and cooperate with the restricting hole 43 in the groove 50 for restricting, a second through hole 511 is provided in the groove wall of the groove assembly 5. The restricting protrusion 53 can pass through the second through hole 511 and cooperate with the restricting hole 43 for restricting, or the restricting protrusion 53 can be retracted and separated from the restricting hole 43. It should be understood that if the restricting hole 43 is not located in the groove 50 when the plug-in connector 4 is plugged into the groove 50, the restricting protrusion 53 can cooperate with the restricting hole 43 for restricting without entering the groove 50, so there is no need to provide a second through hole in the groove wall of the groove assembly 5.

In this embodiment, as shown in FIG. 3 and FIG. 5, there are two restricting baffles 56 and two connecting rods 55. The two restricting baffles 56 are respectively located above and below the groove 50, the control element 57 is provided on the restricting baffle 56 located below, and the restricting protrusion 53 is provided on the restricting baffle 56 located above. The two connecting rods 55 respectively pass through the mounting holes at the two side lugs of the upper and lower groove walls 51 and 52 of the groove assembly 5, and the upper and lower ends of the two connecting rods 55 are respectively connected with the upper and lower restricting baffles 56. Certain spaces for movement are reserved between the upper restricting baffle 56 and the upper groove wall 51 and between the lower restricting baffle 56 and the lower groove wall 52. The elastic members 54 are two spring members which are sleeved on the two connecting rods 55 and installed between the upper groove wall 51 and the lower groove wall 52 of the groove assembly 5. The connecting rod 55 is provided with a stop 550. One end of each spring member is abutted against the upper groove wall 51 of the groove assembly 5, the other end is abutted against the stop 550 provided on the connecting rod 55, and the spring members are in a compressed state.

The spring member in the compressed state exerts a downward elastic force on the connecting rod 55 through the stop 550 to keep the connecting rod 55, the restricting baffle 56 and the restricting protrusion 53 at the lower position. At the same time, the restricting protrusion 53 extends into the groove 50 through the second through hole 511 in the upper groove wall 51, and thus is located in the restriction position. The restricting protrusion 53 extending into the groove 50 can be inserted into the restricting hole 43 in the upper protrusion 41 of the plug-in connector 4 inserted into the groove 50, so that the plug-in connector 4 can be constrained and fixed in the groove 50 and thus a fixed connection of the middle wing and the outer wing is realized.

When the middle wing and the outer wing are needed to be separated and the plug-in connector 4 is pulled out of the groove 50, the control element 57 can be operated so that the restricting baffle 56 and the connecting rod 55 are driven to move upward. By further compressing the spring member through the stop 550 on the connecting rod 55, the restricting baffle 56 drives the restricting protrusion 53 to move upward. When the restricting protrusion 53 moves to the release position, the restricting protrusion 53 is separated from the restricting hole 43, and the plug-in connector 4 can be pulled out of the groove 50 at this point, realizing the separation of the middle wing and the outer wing. After the plug-in connector 4 is pulled out, the control element 57 can be released, and the restricting protrusion 53 automatically moves downward under the elastic force of the spring member, passes through the second through hole 511, extends into the groove 50, and is held in the restriction position under the action of the spring member.

In this embodiment, as shown in FIG. 4 (the insertion end is on the left side in FIG. 4 and the outer end with a stop is on the right side), a slope surface 410 (which may be an inclined or curved surface) is formed on the end face of the insertion end of the plug-in connector 4. Accordingly, as shown in FIG. 5, a slope mating surface 530 (which may be an inclined or curved surface) is formed on the restricting protrusion 53 to mate with the slope surface 410 of the plug-in connector 4. By providing the slope surface 410, it is helpful to push the plug-in connector 4 smoothly into the groove 50. In addition, by mating the slope surface 410 with the slope mating surface 530, it is helpful to push the restricting protrusion 53 from the restriction position to the release position, making the plug-in operation easier and more convenient, and improving the operator's use experience.

Of course, it is also possible to push the restricting protrusion 53 from the restriction position to the release position during the insertion of the plug-in connector 4 by one of the slope surface 410 and the slope mating surface 530. Alternatively, the slope surface 410 and the slope mating surface 530 may not be provided, instead the restricting protrusion 53 may be moved from the restriction position to the release position by the operation of the control element 57 during the insertion process.

When being plugged by an operator, the slope surface 410 of the insertion end of the plug-in connector 4 pushes against the slope mating surface 530 on the restricting protrusion 53 so as to move the restricting protrusion 53, the restricting baffle 56, and the connecting rod 55 upward in a direction perpendicular to the upper groove wall 51 and the lower groove wall 52. The spring members are compressed against the force of the spring members on both sides to move the restricting protrusion 53 from the restriction position to the release position so that the plug-in connector 4 can smoothly enter the groove 50. When the restricting hole 43 reaches the position of the restricting protrusion 53, the restricting protrusion 53 is reset to the restriction position under the elastic restoring force of the elastic member 54, and fitted with the restricting hole 43 so as to keep the plug-in connector 4 firmly fitted with the groove 50. When separating the plug-in connector 4 and the groove 50, the control element 57 is operated to drive the restricting baffle 56 and the connecting rod 55 to move upward, and the spring members are compressed against the force of the spring members on both sides to move the restricting protrusion 53 from the restriction position to the release position, so that the plug-in connector 4 can be pulled out of the groove 50. When the plug-in connector 4 is pulled out to a position where it no longer interferes with the restricting protrusion 53, the restricting protrusion 53 returns to its restriction position under the elastic restoring force of the spring member.

In the process of inserting and separating, by overcoming only a small elastic force of the elastic member 54, the restricting protrusion 53 can be easily moved away from the restriction position or from the restricting hole 43. After the plug-in connector 4 is inserted into position or separated from the groove 50, the restricting protrusion 53 is automatically reset under the elastic restoring force of the elastic member 54 without special action, thus saving time and labor in the inserting and disassembling process of the middle wing and the outer wing and effectively improving the assembling and disassembling efficiency.

In another exemplary embodiment, the lower groove wall 52 of the groove assembly 5 may be provided with a second through hole, and the lower restricting baffle 56 may be correspondingly provided with a restricting protrusion so that the restricting protrusion may extend into the groove 50 through the second through hole in the lower groove wall 52. Accordingly, the restricting hole 43 is provided on the lower wall surface of the plug-in connector 4. The positions of the restricting protrusion 53 and the second through hole 511 are not limited to the middle position of the upper groove wall 51 or the lower groove wall 52, but may be any position other than the middle position. The positions of the restricting protrusion 53 and the second through hole 511 are not limited in this application.

It should be understood that the elastic member 54 may be other types of elastic members other than the spring member, such as elastic pads and the like. There are no restrictions on the specific form and placement of the elastic member 54 in this application.

In an exemplary embodiment, in order to facilitate the operation of the control element 57, the control element 57 may be provided as a push-type control element. A first through hole may be provided on the outer surface of the middle wing (i.e., the skin of the wing unit) on which the groove assembly 5 is provided, and the control element 57 may extend into the first through hole for being pressed.

The control element 57 can pass through the first through hole, and protrude from the outer surface of the middle wing so as to be pressed easily.

In this embodiment, as shown in FIGs. 3-5, the press-type control element 57 is mounted on the restricting baffle 56 located at the lower part of the groove assembly 5. Therefore, a first through hole is provided on the outer surface of the lower part of the middle wing, the lower end of the press-type control element 57 passes through the first through hole, and protrudes from the outer surface of the lower part of the middle wing. When separating the plug-in connector 4 and the groove 50, the operator presses the press-type control element 57, the upper restricting baffle 56 drives the restricting protrusion 53 to move upward, so that the restricting protrusion 53 is disengaged from the restricting hole 43 and the elastic member 54 is compressed, thereby the plug-in connector 4 can be withdrawn. After the plug-in connector 4 is separated from the groove 50, the press-type control element 57 is released, and the control element 57 and the restricting protrusion 53 are automatically reset under the elastic restoring force of the elastic member 54.

The press-type control element 57 used is simple in structure, low in cost and easy to use. The control element 57 protrudes from the outer surface and is also convenient for the operator to press. In addition, the press-type control element 57 is arranged at the lower part of the middle wing and protrudes from the outer surface of the lower part of the middle wing, which has little influence on the overall appearance and aerodynamic performance of the wing unit.

In another exemplary embodiment, the press-type control element 57 may be mounted on the upper restricting baffle 56, in which case a first through hole is provided on the outer surface of the upper part of the middle wing. One end (upper end) of the press-type control element 57 passes through the first through hole, and the control element 57 protrudes from the outer surface. With this embodiment, the technical effects achieved in the embodiment shown in the abovementioned drawings can also be achieved.

In an exemplary embodiment, the outer surface of the middle wing is provided with a first through hole, the control element extends into the first through hole, and the control element is flush with the outer surface of the middle wing or is recessed relative to the outer surface of the middle wing.

In an exemplary embodiment, the outer surface of the lower part of the middle wing is provided with a first through hole, the position of the press-type control element 57 corresponds to the position of the first through hole. The lower end of the press-type control element 57 extends into the first through hole and is flush with or recessed relative to the outer surface of the lower part of the middle wing.

By adopting such structural design, the control element 57 does not protrude from the outer surface of the middle wing, thus eliminating the influence of the control element 57 on the aerodynamics and appearance of the wing unit, and assisting in improving the service performance of the unmanned aerial vehicle.

According to some embodiments of the present application, the first connecting portion and/or the second connecting portion may be made of aluminum alloy or nylon. That is, the first connecting portion may be made of aluminum alloy or nylon, or the second connecting portion may be made of aluminum alloy or nylon, or both the first connecting portion and the second connecting portion may be made of aluminum alloy or nylon.

In an exemplary embodiment, the plug-in connector 4 is made of aluminum alloy or nylon. The plug-in connector 4 is made of aluminum alloy or nylon, which ensures that the plug-in connector 4 has enough strength to connect and support the outer wing, and has good wear resistance, ensuring that the assembly accuracy will not decrease with the increase of assembly times, and improving the assembly accuracy. Thus the problems of high cost and easy to wear existed when the carbon fiber tubes are used as connectors are solved. In addition, the aluminum alloy material or nylon material has low cost and is easy to process, reducing the processing difficulty and cost of the plug-in connector 4.

In an exemplary embodiment, the groove assembly 5 is made of aluminum alloy or nylon.

The structure of the connecting device is not limited to that shown in FIGs. 1-5, but may be other structures.

In an exemplary embodiment, in the connecting device, the restricting mating portion of the restricting device may be a restricting stop surface provided on the plug-in connector. When the restricting protrusion moves to the restriction position, it can press against the restricting stop surface and interfere with the movement of the restricting stop surface and the plug-in connector, thus the plug-in connector is prevented from moving out of the groove and the purpose of positioning and fixing the plug-in connector in the groove is achieved.

If the restricting stop surface is located in the groove after the plug-in connector is plugged into the groove, the groove wall of the groove assembly needs to be provided with a second through hole so that the restricting protrusion can press against the restricting stop surface for restricting after passing through the second through hole and entering the groove. If the restricting stop surface is outside the groove or flush with the edge of the groove after the plug-in connector is plugged into the groove, the groove wall of the groove assembly does not need to be provided with a second through hole, and the restricting protrusion can press against the restricting stop surface for restricting without entering the groove.

In an exemplary embodiment, the restricting device of the connecting device may include a first magnet element and a second magnet element which are respectively arranged on the middle wing and the outer wing, and may be attracted to or separated from each other.

In an exemplary embodiment, as shown in FIG. 6, the outer rib plate 1 of middle wing is provided with a groove assembly 5 and two first magnet elements 58. A plug-in connector and two second magnet elements are correspondingly arranged on the outer rib plate of outer wing. The groove assembly and the plug-in connector of this embodiment may have the same structures as the groove assembly and the plug-in connector of the embodiment shown in FIGs. 1-5. Alternatively, the groove assembly and the plug-in connector of this embodiment may have a tubular structure.

When connecting the middle wing and the outer wing, the plug-in connector can be plugged into the groove 50 of the groove assembly 5 to realize the connection and positioning of the middle wing and the outer wing, and meanwhile the first magnet element 58 and the second magnet element are attracted to each other to keep the middle wing and the outer wing connected and fixed to each other. When separating the middle wing and the outer wing, the first magnet element 58 and the second magnet element can be separated, and then the plug-in connector can be removed from the groove 50 to realize the separation of the middle wing and the outer wing.

In this embodiment, the first magnet element and the second magnet element, when attracted to each other, can provide a force for supporting the connection of the middle wing and the outer wing. Thus the requirement on the structural strength of the plug-in connector and the groove assembly can be reduced.

In an exemplary embodiment, the first connecting portion of the connecting device may include a clamping element 5' including at least one clamping arm 51' and 52', and the second connecting portion may include a clamping connector 4'. The restricting device of the connecting device may include a restricting protrusion 41' (shown by dashed line in the figure) provided on the clamping connector 4'. The clamping arms 51' and 52' can be expanded so that the clamping connector 4' can move into the clamping element 5', and the clamping arms 51' and 52' can be contracted so that the restricting protrusion 41' and the clamping connector 4' are fixed.

When the clamping arms 51' and 52' are expanded, the restricting protrusion 41' does not interfere with the clamping arms 51' and 52' so that the clamping connector 4' can move into the clamping element 5'. After the clamping arms 51' and 52' are contracted, the restricting protrusion 41' interferes with the clamping arms 51' and 52' to prevent the clamping connector 4' from moving in an opposite direction and moving out of the clamping element 5', thereby fixing the clamping connector 4' in the clamping element 5'.

The clamping element 5' may be an elastic clamping element with an elastic member (such as a spring) disposed between the clamping arms 51' and 52'. The elastic member holds the clamping arms 51' and 52' automatically in a contracted state. The clamping element may also have a control element 56', such as a push-type control element, to control the expansion of the clamping arms 51' and 52'.

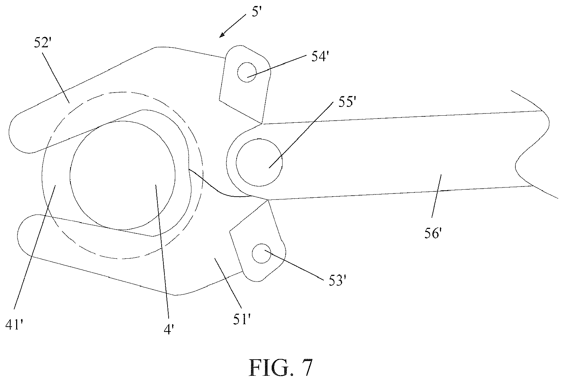

In an exemplary embodiment, as shown in FIG. 7, the clamping arms 51' and 52' are hinged to the outer rib plate of middle wing or the outer rib plate of outer wing at hinge points 53' and 54', respectively, and are hinged to each other at hinge point 55'. The control element 56' is connected to the clamping arms 51' and 52' at the hinge point 55'. The elastic member can be sleeved on the hinge shaft at the hinge point 55', and both ends of the elastic member are respectively connected with the clamping arms 51' and 52'. One end of the clamping connector 4' is provided with the restricting protrusion 41'.

When connecting the middle wing and the outer wing, the control element 56' is pressed which drives the clamping arms 51' and 52' to rotate around the hinge points 53' and 54' respectively and expand, and then the end of the clamping connector 4' provided with the restricting protrusion 41' is moved into the clamping element 5'. After that the control element 56' is released, and under the action of the elastic member, the clamping arms 51' and 52' rotate around the hinge points 53' and 54' respectively and contract, so that the clamping arms 51' and 52' interfere with the movement of the restricting protrusion 41' to prevent the clamping connector 4' from moving out.

When separating the middle wing and the outer wing, the control element 56' is pressed which drives the clamping arms 51' and 52' to rotate around the hinge points 53' and 54' respectively and expand, and then the clamping connector 4' is moved out of the clamping element 5'. After that the control element 56' is released, and the clamping arms 51' and 52' return to the contracted state under the action of the elastic member.

In order to facilitate the pressing of the control element 56', a first through hole may be provided on the outer surface of the middle wing or the outer wing, and the press-type control element may pass through the first through hole for pressing. Alternatively, the press-type control element may extend into the first through hole and be flush with or recessed relative to the outer surface of the middle wing or the outer wing.

An embodiment of the present application provides an unmanned aerial vehicle including the wing unit of the unmanned aerial vehicle described in any of the above embodiments.

The technical scheme described in the embodiment of the application can achieve the following beneficial effects.
1. Since the first connecting portion and the second connecting portion are correspondingly arranged on the outer rib plates of the middle wing and the outer wing, and the restricting device is arranged so that the first connecting portion and the second connecting portion can be kept in a connected state or be separated, the connecting and disconnecting of the outer wing and the middle wing are simple and convenient, the tedious steps of connecting and fastening by using fasteners are avoided, and the use experience of operators is improved.
2. Through the cooperation of the restricting protrusion and the restricting mating portion, when being plugged, the plug-in connector can be firmly constrained in the groove and loosening or falling off can be prevented. The plug-in connector can be taken out by separating the restricting protrusion from the restricting mating portion. The restricting structure is simple and reasonable in design and easy to implement, greatly simplifying the assembly and disassembly process which makes the assembly and disassembly efficiency higher.
3. The connection of the first connecting portion and the second connecting portion, the plug-in fitting of the signal connector and the signal connector groove, and the plug-in fitting of the power connector and the power connector groove can be completed synchronously. Besides, the disassembly can be realized without removing the fasteners, so that easy disassembly can be realized and the disassembly efficiency can be improved.

In the description of this application, it should be noted that the orientation or position indicated by the terms "up", "down", "one side", "the other side", "one end", "the other end", "left" and "right" and the like is determined based on the orientation or position shown in the drawings. Such terms are provided only for the purpose of facilitating and simplifying the description of this application, and do not indicate or imply that the referred structure has the specific orientation or is constructed and operated in the specific orientation, and therefore cannot be construed as limiting this application.

In the description of the embodiments of the present application, the terms "connect", "fit", "assemble", "plug" and "mount" should be explained in a broad sense unless otherwise expressly specified and defined. For example, the term "connect" may refer to a fixed connection, a detachable connection, or an integral connection, or it may refer to direct connection or indirect connection through an intermediate medium, or it can refer to the communication between the interiors of two elements. For those of ordinary skill in the art, the specific meanings of the above-mentioned terms in this application can be explained according to the context.

Although the embodiments disclosed in the present application are described above, they are only adopted for the easy understanding of the present application, but not intended to limit the present application. Any person skilled in the art to which this application pertains may make various modifications and changes to the form and details of the embodiments without departing from the spirit and scope of this application. The patent protection scope of this application is defined by the appended claims.

## Claims

1. A wing unit of an unmanned aerial vehicle, comprising a middle wing, an outer wing and a connecting device, wherein the connecting device comprises a first connecting portion and a second connecting portion, one of the first connecting portion and the second connecting portion is fixed on the middle wing and the other one is fixed on the outer wing, and the first connecting portion and the second connecting portion are detachably connected; and
wherein the connecting device further comprises a restricting device which enables the first connecting portion and the second connecting portion to be fixedly connected or be separated.

2. The wing unit of the unmanned aerial vehicle according to claim 1, wherein the middle wing and the outer wing each have an outer rib plate, and the first connecting portion and the second connecting portion are fixed to the outer rib plate of the middle wing and the outer rib plate of the outer wing respectively.

3. The wing unit of the unmanned aerial vehicle according to claim 1 or 2, wherein the first connecting portion comprises a plug-in connector (4), and the second connecting portion comprises a groove assembly (5), wherein a groove (50) is formed in the groove assembly (5), and the plug-in connector (4) is plugged into the groove (50), and
wherein the restricting device comprises a restricting protrusion (53) arranged on one of the plug-in connector (4) and the groove assembly (5) and a restricting mating portion arranged on the other of the plug-in connector (4) and the groove assembly (5), wherein the restricting protrusion (53) is movable so as to be separated from or fitted to the restricting mating portion for restricting.

4. The wing unit of the unmanned aerial vehicle according to claim 3, wherein the restricting protrusion (53) is elastically connected to the groove assembly (5), wherein the restricting protrusion (53) is movable so as to be separated from or fitted to the restricting mating portion for restricting.

5. The wing unit of the unmanned aerial vehicle according to claim 3, wherein the groove assembly (5) further comprises a control element (57) by which the restricting protrusion (53) is driven to move so as to separate the restricting protrusion (53) from the restricting mating portion.

6. The wing unit of the unmanned aerial vehicle according to claim 5, wherein the control element (57) is a press-type control element, wherein a first through hole is provided in an outer surface of one of the middle wing and the outer wing, and the control element (57) extends into the first through hole, and wherein the control element (57) is flush with the outer surface or the control element (57) is recessed relative to the outer surface; or
the control element (57) is a push-type control element, wherein a first through hole is provided in an outer surface of the lower part of one of the middle wing and the outer wing, and the control element (57) passes through the first through hole, and wherein the control element (57) protrudes from the outer surface.

7. The wing unit of the unmanned aerial vehicle according to claim 5 or 6, wherein the groove assembly (5) further comprises a connecting rod (55) and an elastic member (54), the connecting rod (55) is movably connected to a groove wall of the groove (50), wherein one end of the elastic member (54) presses against the groove wall of the groove (50) and the other end presses against the connecting rod (55), and wherein the restricting protrusion (53) and the control element (57) are both connected with the connecting rod (55).

8. The wing unit of the unmanned aerial vehicle according to claim 7, wherein the groove assembly (5) further comprises a restricting baffle (56) which is connected with the connecting rod (55) and arranged thereon the restricting protrusion (53).

9. The wing unit of the unmanned aerial vehicle according to claim 8, wherein two restricting baffles (56) are provided, the two restricting baffles (56) are respectively connected with two ends of the connecting rod (55), and the restricting protrusion (53) and the control element (57) are respectively arranged on the two restricting baffles (56).

10. The wing unit of the unmanned aerial vehicle according to claim 8 or 9, wherein the restricting baffle (56) is located outside the groove (50), the restricting mating portion comprises a restricting hole (43) or a restricting stop surface arranged on the plug-in connector (4), and wherein the restricting mating portion is located in the groove (50) when the plug-in connector (4) is plugged into the groove (50), the groove wall of the groove (50) is provided with a second through hole (511), the restricting protrusion (53) is able to pass through the second through hole (511) and be fitted with the restricting mating portion for restricting, the restricting protrusion (53) is able to be retracted and separated from the restricting mating portion; or
wherein the restricting baffle (56) is located outside the groove (50), the restricting mating portion comprises a restricting hole (43) or a restricting stop surface provided on the plug-in connector (4), and wherein the restricting mating portion is located outside the groove (50) when the plug-in connector (4) is plugged into the groove (50), the restricting protrusion (53) is able to be fitted with the restricting mating portion for restricting, the restricting protrusion (53) is also able to be retracted and separated from the restricting mating portion.

11. The wing unit of the unmanned aerial vehicle according to any one of claims 3-10, wherein the plug-in connector (4) has an insertion end, and an end face of the insertion end is provided with a slope surface (410) which is an inclined or curved surface; or
wherein the restricting protrusion (53) is provided with a slope mating surface (530) which is an inclined or curved surface.

12. The wing unit of the unmanned aerial vehicle according to any one of claims 3-11, wherein one of the outer surface of the plug-in connector (4) and an inner wall surface of the groove wall of the groove (50) is provided with a protrusion, and the other one is provided with a sunk groove to be fitted with the protrusion.

13. The wing unit of the unmanned aerial vehicle according to claim 1 or 2, wherein the first connecting portion comprises a plug-in connector (4), the second connecting portion comprises a groove assembly (5), wherein a groove (50) is formed in the groove assembly (5), and the plug-in connector (4) is plugged into the groove (50), and
wherein the restricting device comprises a first magnet element (58) and a second magnet element which are respectively arranged on the middle wing and the outer wing and are able to be attracted to or separated from each other.

14. The wing unit of the unmanned aerial vehicle according to claim 1 or 2, wherein the first connecting portion comprises a clamping element (5') comprising at least one clamping arm (51', 52'), and the second connecting portion comprises a clamping connector (4'), wherein the restricting device comprises a restricting protrusion (41') arranged on the clamping connector (4'), the clamping arm (51' 52') being able to expand so that the clamping connector (4') is able to move into the clamping element (5'), the clamping arm (51', 52') being able to contract to fix the restricting protrusion (41') and the clamping connector (4').

15. The wing unit of the unmanned aerial vehicle according to any one of claims 1-14, wherein the connecting device further comprises a signal connector and a signal connector groove (60), wherein one of the signal connector groove (60) and the signal connector is fixed to the outer rib plate of middle wing and the other one is fixed to the outer rib plate of the outer wing, and wherein the signal connector is plugged into the signal connector groove (60).

16. The wing unit of the unmanned aerial vehicle according to any one of claims 1-15, wherein the connecting device further comprises a power connector and a power connector groove (70), wherein one of the power connector groove (70) and the power connector is fixed to the outer rib plate of middle wing and the other one is fixed to the outer rib plate of the outer wing, and wherein the power connector is plugged into the power connector groove (70).

17. The wing unit of the unmanned aerial vehicle according to any one of claims 1-16, wherein the first connecting portion and/or the second connecting portion are made of aluminum alloy or nylon.

18. An unmanned aerial vehicle comprising the wing unit of the unmanned aerial vehicle according to any one of claims 1 to 17.
